# EUROPEAN PATENT APPLICATION

(11) **EP 4 748 672 A1**
(43) Date of publication of application: **27.05.2026**
(21) Application number: 24214818.7
(22) Date of filing: 22.11.2024
(51) Int. Cl.: B60W 30/09, B60W 30/095, B60W 60/00, B60W 50/00

(54) **SYSTEM AND METHOD FOR CONTROLLING ONE OR MORE VEHICLES**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

The present disclosure relates to a computer system (100) for controlling a vehicle (10, 10a) relative to at least one adjacent vehicle (10, 10b) operating within a confined geographical area (200), the computer system comprising processing circuitry (102) configured to: determine a position, speed and trajectory of the at least one adjacent vehicle relative to a position, speed and trajectory of the vehicle; determine that a first collision (80) between the vehicle and the at least one adjacent vehicle is imminent based on the determined position, speed and trajectory of the at least one adjacent vehicle relative to the position, speed and trajectory of the vehicle; predict an impact level of the first collision on the vehicle, the impact level being indicative of a predicted effect of the first collision on the vehicle; determine at least one alternative trajectory for the vehicle based on the predicted impact level and any predicted potential secondary collision between the vehicle and at least one object (lOc); and control the vehicle based on the determined at least one alternative trajectory.

## Description

### TECHNICAL FIELD

The disclosure relates generally to the field of controlling one or more vehicles operating in a confined geographical area, such as one or more autonomous electric heavy-duty vehicles operating in a confined area. In particular aspects, the disclosure relates to a computer system, a vehicle, and methods for controlling at least one vehicle in relation to an adjacent vehicle operating in a confined geographical area. The disclosure can be applied to heavy-duty vehicles, such as trucks, buses, and construction equipment, among other vehicle types. In particular, the disclosure can be applied to autonomous vehicles, such as unmanned autonomous vehicles operating in a confined geographical area. Although the disclosure may be described with respect to a particular vehicle, the disclosure is not restricted to any particular vehicle.

### BACKGROUND

Autonomous vehicles have witnessed widespread adoption in various industries, transforming efficiency and safety in tasks such as material transport and handling in confined geographical areas, e.g., transportation of bulk material from a loading zone to an unloading zone. However, challenges persist when deploying an autonomous vehicle among other vehicles during changing operational and environmental conditions in the confined geographical area.

By way of example, in confined spaces, such as loading areas, the maneuverability of autonomous vehicles may become an important factor for avoiding collisions and ensuring the safety of both equipment and personnel.

Thus, there is a continuing need for further improvements in the vehicle control and motion management of heavy-duty vehicles, such as autonomous vehicles operating in a confined geographical area.

### SUMMARY

According to a first aspect of the disclosure, there is provided a computer system for controlling a vehicle relative to at least one adjacent vehicle operating within a confined geographical area. The computer system comprises processing circuitry configured to: determine a position, speed and trajectory of the at least one adjacent vehicle relative to a position, speed and trajectory of the vehicle; determine that a first collision between the vehicle and the at least one adjacent vehicle is imminent based on the determined position, speed and trajectory of the at least one adjacent vehicle relative to the position, speed and trajectory of the vehicle; predict an impact level of the first collision on the vehicle, the impact level being indicative of a predicted effect of the first collision on the vehicle; determine at least one alternative trajectory for the vehicle based on the predicted impact level and any predicted potential secondary collision between the vehicle and at least one object; and control the vehicle based on the determined at least one alternative trajectory.

Typically, the processing circuitry may be configured to control the vehicle based on the determined at least one alternative trajectory to mitigate the predicted effect of the first collision.

The at least one object may refer to any one of a stationary object and a moving object. In one example, the object is another adjacent vehicle.

The disclosure is at least partly based on the realization that deploying and controlling vehicles, such as electric autonomous vehicles, in a confined geographical area may still be challenging in terms of providing a reliable and safe operation of the vehicle. By way of example, collision management systems for autonomous vehicles tend to employ a reactive approach, primarily focusing on passive safety mechanisms activated after the collision occurred.

The first aspect of the disclosure may seek to address the limitations of hitherto known collision management systems that are generally configured to adjust safety thresholds only in response to an initial impact, without the capacity to influence or alter the outcome of the first collision itself. More specifically, the present disclosure aims to provide more proactive approach, wherein the computer system is configured to predict the risk and potential impact of a first collision along with any subsequent impacts from any secondary collision(s). Such predictive ability allows the system to determine and initiate a suitable trajectory adjustment for the autonomous vehicle prior to the occurrence of the first collision, thereby enhancing the capability of the vehicle to mitigate or avoid total impact from multiple potential collisions.

A technical benefit may include an improvement in predictive collision management for vehicles, such as autonomous vehicles. More specifically, the present disclosure aims to provide a more forward-looking safety system by configuring the computer system to evaluate one or more collision risks proactively, allowing trajectory adjustments to be made even before the first predicted impact. Such capability enables the computer system to influence both the first and any subsequent impacts, thereby potentially reducing or even avoiding secondary collisions altogether. To this end, the proposed computer system provides an enhanced level of safety and operational resilience for vehicles navigating complex environments.

In addition, the computer system provides a dual-focus approach by predicting and preparing for both an initial impact and any secondary impacts, with the capability to act on the prediction even prior to the occurrence of the first impact. Such improvement is achieved by configuring the proposed computer system to estimate and predict total impact outcomes from both first and potential secondary collisions before any collision has taken place. As such, the system may further minimize, or at least reduce, total collision impact by actively preventing hazardous post-collision scenarios.

Optionally in some examples, including in at least one preferred example, the processing circuitry may be configured to generate multiple alternative trajectories for the vehicle based on the predicted impact level from the first collision and any predicted potential secondary collision. A technical benefit may include enabling the vehicle to consider a variety of potential responses by generating multiple alternative trajectories based on the predicted impact level of the first collision and any impact from any potential secondary collisions. Such flexibility allows the system to evaluate various outcomes, providing the vehicle with a range of options to reduce the impact severity and improve post-collision safety.

Optionally in some examples, including in at least one preferred example, the processing circuitry may be configured to predict an occurrence of at least one potential secondary collision between the vehicle and the at least one object. Moreover, in such example, the processing circuitry may be configured determine at least one alternative trajectory for the vehicle based on the predicted impact level and the predicted at least one potential secondary collision between the vehicle and the at least one object. In such example, the determined alternative trajectory is a trajectory for the vehicle, in which predicted impact level from the predicted first collision and predicted impact level from the predicted secondary collision are taken into consideration.

Optionally in some examples, including in at least one preferred example, the processing circuitry may be configured to select a primary trajectory from among the generated multiple alternative trajectories that reduces the predicted impact level from the first collision and any predicted potential secondary collision. A technical benefit may include enhancing the control accuracy of the vehicle by configuring the system to select a primary trajectory from among multiple generated alternatives. By selecting a trajectory that reduces the predicted impact level from the first collision and any potential secondary collisions, the system further improves collision response, thereby improving the safety and stability of the vehicle in dynamic and complex environments.

Optionally in some examples, including in at least one preferred example, the processing circuitry may be configured to select a primary trajectory from among the generated multiple alternative trajectories that minimizes the predicted impact level from the first collision and any predicted potential secondary collision. A technical benefit may include further improving the ability of the system to reduce collision impact severity. By configuring the processing circuitry to select a primary trajectory that minimizes the predicted impact levels from both the first and secondary collisions, the system is configured to focus on reducing damage to the vehicle.

Optionally in some examples, including in at least one preferred example, the processing circuitry may be configured to select a primary trajectory among the generated multiple alternative trajectories that minimizes the predicted impact level from the first collision and the predicted potential secondary collision for the vehicle.

Optionally in some examples, including in at least one preferred example, the processing circuitry may be configured to select a primary trajectory among the generated multiple alternative trajectories that minimizes the predicted impact level from the first collision and the predicted potential secondary collision for the vehicle and for the adjacent vehicle.

Optionally in some examples, including in at least one preferred example, the processing circuitry may be configured to select a primary trajectory among the generated multiple alternative trajectories that minimizes the predicted impact level from the first collision and the predicted potential secondary collision for all vehicles involved in the collisions.

Optionally in some examples, including in at least one preferred example, the predicted impact level of the first collision and a subsequent impact level from any predicted potential secondary collision may be defined as a function of estimated jerk in the vehicle. A technical benefit may include improved responsiveness of the vehicle in collision scenarios. By defining impact levels as a function of estimated jerk in the vehicle, the system can make real-time adjustments based on sudden changes in acceleration, which allows the system to respond more dynamically to collision events and better control the movements of the vehicle to minimize impact forces. Another advantage of utilizing jerk is that it provides a measurable and estimable indicator of collision severity.

Optionally in some examples, including in at least one preferred example, the predicted impact level of the first collision and a subsequent impact level from any predicted potential secondary collision may be defined as a function of the number of involved vehicles in the first collision and at least one predicted potential secondary collision. A technical benefit may include the ability to better assess and control the vehicle's trajectory in multi-vehicle collision scenarios. Hence, by defining impact levels based on the number of vehicles involved in the first and secondary collisions, the system is configured to improve collision responses in various traffic situations.

Optionally in some examples, including in at least one preferred example, the predicted impact level of the first collision and a subsequent impact level from the predicted potential secondary collision may be determined from an estimation of energy generated in the first collision and any predicted potential secondary collision. A technical benefit may include enhancing the accuracy in predicting collision outcomes by determining impact levels from an estimation of energy generated in the first and secondary collisions. Such energy-based approach allows the system to improve the responses of the vehicle to reduce the cumulative effects of collisions, leading to improved control of the vehicle's trajectory post-collision and reducing the risk of further impacts.

Optionally in some examples, including in at least one preferred example, the processing circuitry may further be configured to evaluate a risk level associated with each of the generated alternative trajectories based on environmental conditions, and to deprioritize trajectories leading the vehicle into an area with limited visibility or unknown conditions. A technical benefit may include increased safety in high-risk environments by configuring the system to evaluate the risk level of each alternative trajectory based on environmental conditions. By deprioritizing trajectories that would lead the vehicle into areas with limited visibility or unknown conditions, the system may enhance, or at least maintain situational awareness for safer vehicle navigation.

Optionally in some examples, including in at least one preferred example, the processing circuitry may be configured to control the vehicle based on the determined at least one alternative trajectory prior to the occurrence of the first collision. A technical benefit may include providing an even more proactive collision mitigation by allowing the system to control the vehicle based on at least one alternative trajectory before the first collision occurs. Such proactive control helps mitigate the effects of the initial collision, improving safety outcomes and reducing the chances of secondary impacts by positioning the vehicle optimally in advance.

Optionally in some examples, including in at least one preferred example, the processing circuitry may be configured to control the vehicle based on the determined at least one alternative trajectory after the occurrence of the first collision, but prior to any secondary collisions. A technical benefit may include the ability to further improve post-collision outcomes by allowing the system to control the vehicle based on an alternative trajectory after a first collision, but prior to any secondary collisions. Such post-first-impact control capability enables the vehicle to quickly adapt to changing conditions, potentially avoiding further impacts and reducing the severity of any secondary collisions.

Optionally in some examples, including in at least one preferred example, the processing circuitry may be configured to control the vehicle by controlling any one of a brake system and steering system of the vehicle. A technical benefit may include improved precision in vehicle control by configuring the system to actuate the brake and/or steering systems directly. Such configuration allows the system to exert precise control over the movements of the vehicle, ensuring a more effective response to collision risks and enhancing overall stability during evasive maneuvers.

Optionally in some examples, including in at least one preferred example, the processing circuitry may further be configured to determine that the first collision between the vehicle and the at least one adjacent vehicle is imminent using historical data indicative of behaviors and capabilities associated with the at least one adjacent vehicle. A technical benefit may include greater accuracy in predicting imminent collisions by configuring the system to use historical data on the behaviors and capabilities of surrounding vehicles. Such predictive ability allows the system to account for typical actor behavior, further improving the reliability of collision forecasts.

Optionally in some examples, including in at least one preferred example, the processing circuitry may be configured determine a position, speed and trajectory of the at least one adjacent vehicle and configured to determine a position, speed and trajectory of the vehicle. Moreover, based on the determined positions, speeds and trajectories of the vehicle and the at least one adjacent vehicle, the processing circuitry is configured to determine a position, speed and trajectory of the at least one adjacent vehicle relative to the position, speed and trajectory of the vehicle.

Optionally in some examples, including in at least one preferred example, the processing circuitry may be configured to acquire data indicative of the position, speed and trajectory of the at least one adjacent vehicle, and configured to determine the position, speed and trajectory of the at least one adjacent vehicle from the acquired data, and/or wherein the processing circuitry is configured to acquire data indicative of the position, speed and trajectory of the vehicle, and configured to determine the position, speed and trajectory of the vehicle from the acquired data. A technical benefit may include increased situational awareness through the configuration to acquire data on the position, speed, and trajectory of the vehicle and adjacent vehicles.

Optionally in some examples, including in at least one preferred example, the processing circuitry may be configured to acquire data from a surrounding sensing system configured to acquire positional and movement-related information of any one of the vehicle, the at least one adjacent vehicle and the object, such as a stationary object, a moving object, e.g. at least one another adjacent vehicle. A technical benefit may include the capability to gather highly accurate positional and movement-related information.

Optionally in some examples, including in at least one preferred example, the surrounding sensing system may be configured to continuously monitor a surrounding environment of the vehicle. A technical benefit may include the ability to maintain real-time environmental awareness through continuous monitoring of the surroundings. Such configuration may typically include continuously acquiring positioning data of both the vehicle and nearby vehicles.

Optionally in some examples, including in at least one preferred example, the surrounding sensing system may comprise any one of a radar system, a lidar system, a camera and a vehicle-to-vehicle information system. Optionally in some examples, including in at least one preferred example, the surrounding sensing system may comprise the radar system, the lidar system, the camera and the vehicle-to-vehicle information system. A technical benefit may include improved flexibility in sensor integration by configuring the surrounding sensing system to use multiple sensor modalities. The camera may be a mono camera and/or a stereo camera.

According to a second aspect of the disclosure, there is provided a vehicle comprising the computer system according to the first aspect. The second aspect of the disclosure may seek to solve the same problem as described for the first aspect of the disclosure. Thus, effects and features of the second aspect of the disclosure are largely analogous to those described above in connection with the first aspect of the disclosure. The vehicle may be an autonomous vehicle, e.g. an electric autonomous vehicle powered by an electric propulsion system.

According to a third aspect of the disclosure, there is provided a computer-implemented method for controlling a vehicle relative to at least one adjacent vehicle operating within a confined geographical area, the method comprising: determining, by processing circuitry of a computer system, a position, speed and trajectory of the at least one adjacent vehicle relative to a position, speed and trajectory of the vehicle; determining, by the processing circuitry of the computer system, that a first collision between the vehicle and the at least one adjacent vehicle is imminent based on the determined position, speed and trajectory of the at least one adjacent vehicle relative to the position, speed and trajectory of the vehicle; predicting, by the processing circuitry of the computer system, an impact level of the first collision on the vehicle, the impact level being indicative of a predicted effect of the first collision on the vehicle; determining, by the processing circuitry of the computer system, at least one alternative trajectory for the vehicle based on the predicted impact level and any predicted potential secondary collision between the vehicle and at least one object; and controlling, by the processing circuitry of the computer system, the vehicle based on the determined at least one alternative trajectory.

The third aspect of the disclosure may seek to solve the same problem(s) as described for the first to second aspects of the disclosure. Thus, effects and features of the third aspect of the disclosure are largely analogous to those described above in connection with the first and second aspects of the disclosure.

According to a fourth aspect of the disclosure, there is provided a computer program product comprising program code for performing, when executed by the processing circuitry comprised in the computer system of the first aspect, the method of the third aspect.

According to a fifth aspect of the disclosure, there is provided a non-transitory computer-readable storage medium comprising instructions, which when executed by the processing circuitry of the first aspect, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits and/or technical improvements.

### BRIEF DESCRIPTION OF THE DRAWINGS

Examples are described in more detail below with reference to the appended drawings.
FIGS. 1A - 1B illustrate exemplary views of vehicles and vehicle powertrain systems, comprising a computer system having a processing circuitry configured to control various operations of the vehicle according to an example.
FIG. 2 illustrates an exemplary overview of a confined geographical area with a number of autonomous vehicles, according to examples.
FIGS. 3A - 3B illustrate exemplary overviews of collisions between autonomous vehicles that can be managed and predicted by a computer system, according to examples.
FIG. 4 is a flow chart of an exemplary method to control a vehicle according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is at least partly based on the realization that deploying and controlling vehicles, such as autonomous electric vehicles, in a confined geographical area may still be challenging in terms of providing a reliable and safe operation of the vehicle. By way of example, collision management systems for vehicles tend to employ a reactive approach, primarily focusing on passive safety mechanisms activated after the collision occurred.

For these and other reasons, there is still a need for improving the operations of vehicles in confined geographical areas, such as autonomous vehicles in confined geographical areas.

To remedy this, the present disclosure provides a computer system, a vehicle including the computer system, and methods for controlling at least one of the vehicles in the confined geographical area.

Thus, the disclosure seeks to address the limitations of hitherto known collision management systems that are generally configured to adjust safety thresholds only in response to an initial impact, without the capacity to influence or alter the outcome of the first collision itself. More specifically, the present disclosure aims to provide more proactive approach, wherein the computer system is configured to predict the risk and potential impact of a first collision along with any subsequent impacts from any secondary collision(s). Such predictive ability allows the system to determine and initiate a suitable trajectory adjustment for the autonomous vehicle prior to the occurrence of the first collision, thereby enhancing the capability of the vehicle to mitigate or avoid total impact from multiple potential collisions.

A technical benefit includes an improvement in predictive collision management for vehicles, such as autonomous vehicles. More specifically, the present disclosure aims to provide a more forward-looking safety system by configuring the computer system to evaluate collision risks proactively, allowing trajectory adjustments to be made even before the first predicted impact. Such capability enables the computer system to influence both the first and any subsequent impacts, thereby potentially reducing or even avoiding secondary collisions altogether. To this end, the proposed computer system provides an enhanced level of safety and operational resilience for vehicles navigating complex environments. In addition, the computer system provides a dual-focus approach by predicting and preparing for both an initial impact and any secondary impact(s), with the capability to act on such prediction even prior to the first impact, i.e. the occurrence of the first collision. Such improvement is achieved by configuring the proposed computer system to estimate and predict total impact outcomes from the first collision and any potential secondary collision(s) before any collision has taken place. As such, the system may further minimize, or at least reduce, total collision impact by actively preventing hazardous post-collision scenarios.

To this end, the proposed computer system allows for improving the control of one or more vehicles, such as autonomous electric vehicles, in a confined geographical area containing one or more operating restricting conditions.

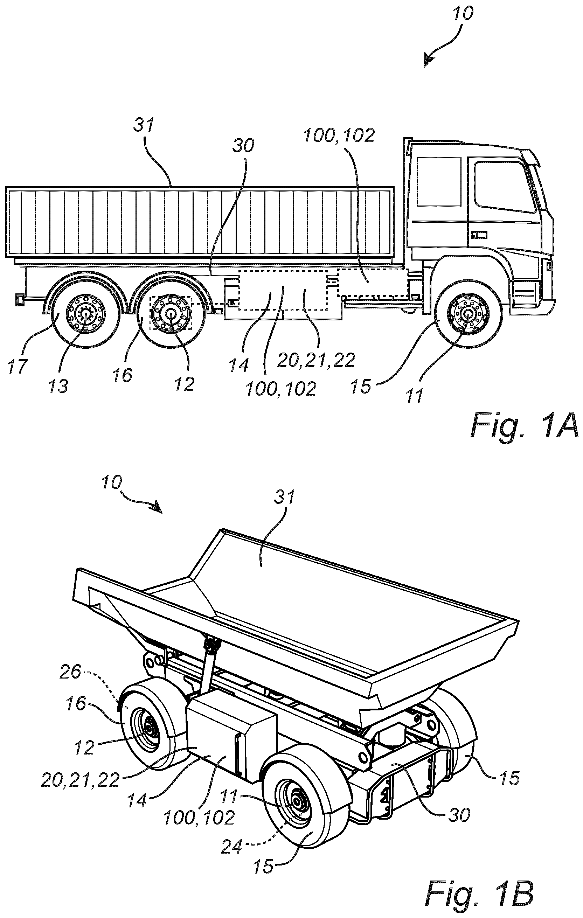

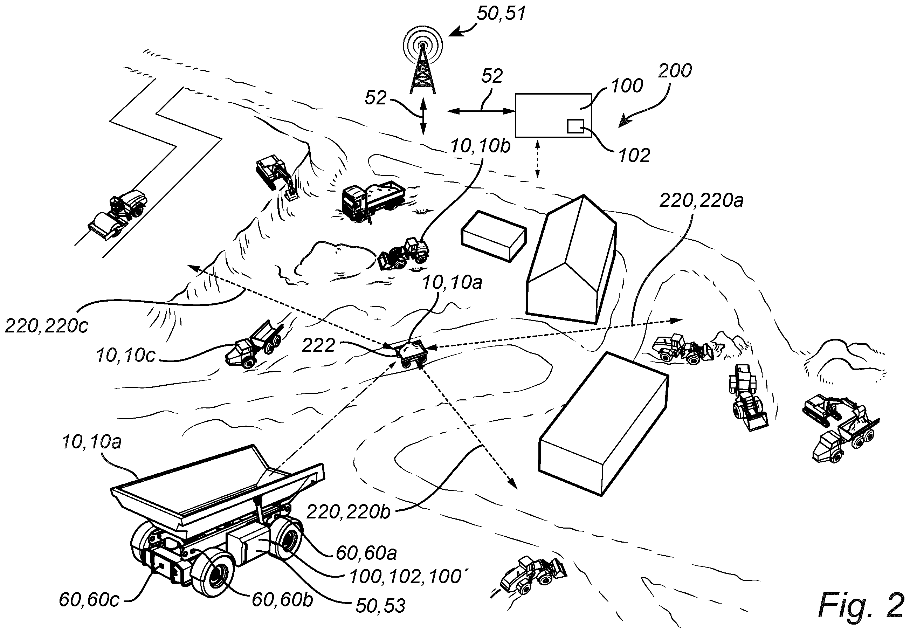

Examples of such computer systems and vehicles will now be described in relation to FIGS. 1A to 1B, in combination with FIGS. 2 to 5.

In FIG. 1A, there is illustrated one example of a vehicle 10. The vehicle 10 is here a heavy-duty vehicle, such as a truck. While the vehicle 10 in FIG. 1A is illustrated as a truck, the vehicle 10 may be of any type of vehicle suitable for transporting people and/or goods, such as bulk material from one location to another. For example, the vehicle may be an excavator, loader, articulated hauler, dump truck, truck or any other suitable vehicle known in the art. In some examples, the vehicle 10 may be driven by an operator. The vehicle 10 is here an autonomous vehicle that may be controlled by a vehicle motion management (VMM) unit configured to individually control various vehicle motion and steering systems, vehicle axles and/or wheels of the vehicle.

In FIG. 1A, the vehicle 10 is an electric vehicle. Accordingly, the vehicle 10 is an autonomous electric vehicle. The vehicle 10 comprises a powertrain system 14. The powertrain system 14 comprises a propulsion unit 20. The propulsion unit 20 is typically an energy converting unit configured to provide a torque. In this example, the propulsion unit 20 is an electric machine. The propulsion unit may include several electric machines. In other types of arrangement, the propulsion unit 20 may include a traction-supporting internal combustion engine, such as a diesel or hydrogen fuel engine.

The electric machine 20 is further powered by a battery system and/or a fuel cell system. Hence, the powertrain system 14 here also comprises any one of a battery system 21 and a fuel cell system 22. In other words, the powertrain system 14 is an electric powertrain system and the vehicle 10 is a fully electrical vehicle. However, in some examples, the vehicle 10 may be a hybrid vehicle, including e.g. a supporting internal combustion.

Accordingly, the powertrain system 14 in FIG. 1A comprises at least one propulsion unit in the form of one or more electric machines 20 and the battery system 21. Optionally, the powertrain system 14 also comprises the fuel cell system 22.

The powertrain system 14 is configured to provide traction power for the vehicle 10. The traction power is delivered to one or more ground engaging members 15, 16, 17. In this example, the ground engaging members are wheels 15, 16, 17. For ease of reference, the following description will refer to the wheels as the ground engaging member. By way of examples, the traction power is delivered to a pair of wheels, such as the pair of wheels 15 by the battery system 21, and/or the fuel cell system 22, in cooperation with one or more electric machines 20.

Electric machines 20 are responsible for converting electrical energy from the battery system 21 or fuel cell system 22 into mechanical power to drive the wheels. The electric machine 20 is thus configured to provide traction power to the vehicle 10. The electric machine 20 is configured to be connected to the battery system 21 and the fuel cell system 22. The electric machine 20 is arranged to receive electric power from any one of the battery system and the fuel cell system. The electric machine 20 is here also arranged specifically as a traction electric machine for the vehicle. The traction electric machine is configured to provide traction power to the vehicle 10.

Moreover, as illustrated in FIG. 1A, the vehicle 10 comprises a chassis 30 and a load carrying container 31 connected to the chassis 30. The chassis 30 is configured to support the load carrying container 31. The load carrying container 31 is configured to carry materials, such as mining shovel or the like.

As depicted in FIG. 1A, the vehicle 10 is supported by wheels 15, 16, 17, where each wheel comprises a tire. The vehicle 10 comprises multiple axles, including a front axle 11 and a number of rear axles 12, 13. The front axle 11 is here considered as a first wheel axle. Moreover, one of the rear axles, such as the rear axle 12, is considered as the second wheel axle. The tractor unit has front wheels 15 which are normally steered, and rear wheels 16, 17 of which at least one pair are driven wheels. Any one of the front axle 11 and the rear axles 12, 13 may be configured to be driven by the powertrain system 14. In some examples, only the front axle is driven by the powertrain system 14. In other examples, only one of the rear axles, such as the rear axle 12, is driven by the powertrain system 14. In yet other examples, all axles 11, 12, 13 are driven by the powertrain system 14. The operations of the wheels 15, 16, 17 and the axles 11, 12, 13 can be controlled in an autonomous manner by a computer system 100, as is commonly known within the field of autonomous vehicles. The wheels 15, 16, 17 and the axles 11, 12, 13 can be configured to be controlled by a steering system of an autonomous vehicle. Hence, the vehicle 10 in FIG. 1A is one example of a configuration of an autonomous vehicle.

FIG. 1B schematically illustrates another example of an autonomous electric vehicle 10. The vehicle 10 of FIG. 10 is a load carrying vehicle in the form of a hauler. The load carrying vehicle 10 comprises the chassis 30, the load carrying container 31 connected to the chassis 30, and two pair of wheels 15, 16. The vehicle 10 of FIG. 1B further comprises the front axle 11. The front axle 11 is provided with the pair of wheels 15. Moreover, the vehicle 10 of FIG. 1B comprises the rear axle 12. The rear axle 12 is provided with the corresponding set of pair of wheels 16. The vehicle 10 of FIG. 1B is also an example of an autonomous electric vehicle comprising front wheel and rear wheel steering. Hence, the vehicle 10 here comprises a front wheel steering device 24 and a rear wheel steering device 26. Each one of the front wheel steering device 24 and the rear wheel steering device 26 is configured to control steering of the respective axle and its corresponding wheels. Each one of the front wheel steering device 24 and the rear wheel steering device 26 is connected to the computer system 100. Hence, the computer system 100 is configured to control steering of the front axle 11 and the rear axle 12. The steering of the front axle 11 and the rear axle 12 can be performed either individually, or in combination. As such, the computer system 100 is configured to control steering of the front axle 11 and the rear axle 12 by means of the front wheel steering device 24 and the rear wheel steering device 26, respectively. The front wheel steering device 24 and the rear wheel steering device 26 are integral parts of one example of a steering system of an autonomous vehicle. Such steering is automatically controlled by the computer system 100, as is commonly known within the field of autonomous vehicles. Hence, the vehicle 10 in FIG. 1B is configured as an autonomous vehicle.

The vehicles 10 in FIGS. 1A and 1B further comprise a brake system having one or more brakes, which are provided e.g. in the form of one or more service brakes. The first (left) and second (right) driven wheels are typically arranged to be braked by respective first and second service brakes. Each one of the service brakes may, e.g., be a pneumatically actuated disc brake or drum brake. The wheel service brakes are controlled by corresponding brake controllers (not illustrated). Each one of the wheel brake controllers is here communicatively coupled to the computer system 100, allowing the computer system 100 to communicate with the brake controllers, and thereby control vehicle braking. These parts of the powertrain system 14 are conventional parts in an electric powertrain system, and thus not further described herein. The brake system is configured to be controlled by the computer system 100.

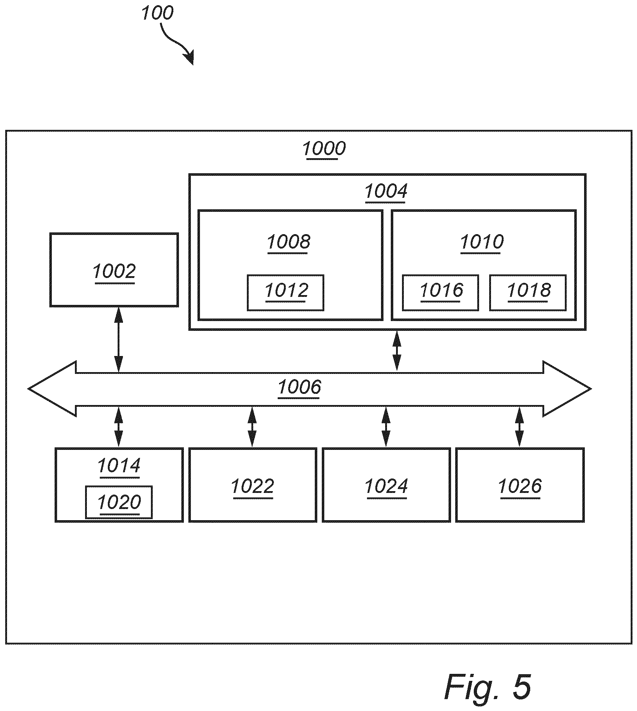

In FIGS. 1A and 1B, the vehicle 10 comprises the computer system 100. For example, the computer system 100 is an integral part of the powertrain system 14. In other examples, the computer system 100 and the powertrain system 14 may be separate parts configured to communicate with each other. As further illustrated, the computer system 100 comprises processing circuitry 102. The processing circuitry 102 is configured to control the vehicle 10. In some examples, the processing circuitry 102 may be part of a computer system 100 of several vehicle, in which the processing circuitry 102 is configured to control a plurality of vehicles 10. The computer system 100 may also comprise a memory and a system bus. These components and further optional technical details of the computer system 100 are described in relation to FIG. 5.

The autonomous vehicle 10 of any one of FIGS. 1A to 1B may be configured to autonomously navigate in a confined geographical area 200 as schematically illustrated in FIG. 2. More specifically, FIG. 2 illustrates a number of vehicles 10 operating within the confined geographical area 200. In FIG. 2, the confined geographical area 200 corresponds to a quarry area. By way of example, the vehicles 10 in the confined geographical area 200 are controlled along one or more vehicle pathways 220 in the form of routes comprising a set of route segments, as illustrated in FIG. 2.

The confined geographical area 200 can be defined in several different manners, as is commonly known in the art. By way of example, defining the confined geographical area 200 for autonomous vehicles 10 here involves specifying the boundaries and parameters within which these vehicles are authorized to operate. The definition of the confined geographical area 200 often includes considerations for geographic limits and operational boundaries for the vehicle(s) 10. More specifically, the confined geographical area 200 for autonomous vehicles 10 is defined by any one of geographic coordinates, which specifies the geographical coordinates (latitude and longitude) that define the boundaries of the area, physical landmarks, which identifies physical landmarks or boundaries that set the edges of the confined area, and digital mapping, which utilizes digital mapping technologies to create a virtual boundary for the confined area. GPS-based mapping systems can e.g. be employed to create a geofence, a virtual perimeter that the autonomous vehicles 10 should not cross. GPS or RFID (Radio-Frequency Identification) may also be used to further create a virtual boundary.

The definition of the confined geographical area 200 may also be based on operational boundaries, which specify operational restrictions within the confined geographical area 200. The operational restrictions may include speed limits, acceleration limits, deceleration limits, turning radius limits, specific routes, or areas where certain vehicle behaviors are restricted or encouraged. The definition of the confined geographical area 200 may also be based on environmental conditions (e.g. weather conditions, lighting, or specific road surfaces). The definition of the confined geographical area 200 may also be based on legal and regulatory framework and various safety measures.

Also, in order to allow for communication between the vehicles 10, the confined geographical area 200 may generally include communication protocols so as to establish communication protocols between the autonomous vehicles 10 and a central control system or infrastructure within the confined area. In this manner, the vehicles 10 can be monitored in real-time and further coordinated in relation to each other. In FIG. 2, the central control system is an integral part of the computer system 100.

The vehicles 10 are controlled in an autonomous manner so as to carry out several different transportation missions within the quarry area. The vehicles 10 are operating along one or more vehicle pathways 220, 220a, 220b, 220c, 220d, as illustrated in FIG. 2. The vehicles 10 may not only transport material from a first starting position (location) 222, such as a loading zone, to a second destination position (location) 223, such as an unloading zone, but also perform one or more quarrying operations, including e.g. removal of material from the earth's surface. The materials may e.g. be rock, sand, gravel, limestone, or other minerals.

The vehicle pathway 220 is here typically defined by the road, including one or more road segments. The vehicle pathway 220 also corresponds to the intended route for the transport (transport mission). In other words, the computer system 100 typically receives transport mission characteristics about the upcoming transport mission, which here includes route data about the intended route. The intended route for the vehicle 10 thus refers to the pathway of the vehicle 10 for performing the transport mission. The vehicle pathway 220, sometimes also referred to as the vehicle path, thus refers to the specific trajectory or course that the vehicle 10 is planned to take to perform the transport mission. The vehicle pathway 220 typically encompasses the physical route traveled by a vehicle 10, as illustrated in FIG. 2. The route, or intended route, typically refers to a predetermined course for the vehicle 10 to operate from one place to another, e.g. from 222 to 223 along the vehicle pathway 220. The route can include a series of directions or instructions indicating the specific roads or paths to take along the vehicle pathway 220 to reach a destination.

To navigate each route segment within a set of segments, the autonomous vehicle 10 requires information about its location with respect to the route. For this purpose, a localization service may be utilized to determine the position of the vehicle relative to the route 220.

In this example, the computer system 100 is also configured to communicate with one or more surrounding sensing systems 50, 60 that acquire positional and movement-related information about the vehicles 10 within a confined geographical area 200.

For example, the vehicle 10 comprises a first surrounding sensing system 60 configured to monitor the area around the vehicle 10. The first surrounding sensing system 60 detects and tracks objects and vehicles within the vehicle's vicinity, continuously gathering positional and movement-related information to support autonomous navigation and situational awareness. By way of example, the first surrounding sensing system is an onboard surrounding sensing system 60. The onboard surrounding sensing system 60 is arranged onboard the autonomous vehicle 10 to continuously monitor the immediate surroundings of the vehicle 10. The onboard surrounding sensing system 60 detects nearby objects and vehicles, enabling situational awareness within the confined area 200.

In addition, or alternatively, the surrounding sensing system may be an external system 50 providing global location data. The external system is here referred to as a second surrounding sensing system 50. Together, the onboard first surrounding sensing system 60 and the external second surrounding sensing system 50 supply continuous data on both the immediate environment and the vehicle's geographic position. As such, each one of the surrounding sensing systems 50, 60 is configured to continuously monitor a surrounding environment of each one of the vehicles 10 in the confined geographical area 200. Hereby, each one of the surrounding sensing systems 50, 60 acquires positional and movement-related information of the vehicles 10 in the confined geographical area 200. The computer system 100 is thus configured to acquire positional and movement-related information of the vehicles 10 within the confined geographical area.

Each one of the surrounding sensing systems 50, 60 can be configured and arranged in several different manners, including an arrangement on the vehicles 10 as well as an arrangement on a remote location within the confined geographical area 200. In one example, the surrounding sensing system 50, 60 comprises any one of a radar system, a lidar system, a camera and a vehicle-to-vehicle information system.

FIG. 2 illustrates one example of the surrounding sensing system(s). As shown in FIG. 2 the surrounding sensing system comprises the onboard first surrounding sensing system 60. The onboard first surrounding sensing system 60 is configured to monitor and determine motion and position of the vehicle 10 in relation to other objects, such as other vehicles, or points of reference (without necessarily knowing its exact geographic coordinates). As such, the onboard first surrounding sensing system 60 is configured to determine a relative position of the vehicle 10 in relation to other objects, such as other vehicles, or points of reference, in the confined geographical area 200. Moreover, the onboard first surrounding sensing system 60 is configured to determine motion data of the vehicle 10, such as speed and trajectory of the vehicle 10.

In one example, the onboard first surrounding sensing system 60 is configured to estimate the vehicle position, speed and trajectory based on odometry data. The odometry data contains any one of vehicle speed data, vehicle acceleration data, turning rate data, wheel rotation data, vehicle orientation data, and relative distance traveled data. Accordingly, the onboard first surrounding sensing system 60 here comprises one or more odometry acquiring devices. By way of example, the onboard first surrounding sensing system 60 comprises any one of a lidar system, radar system, and a camera, such as a mono camera, a stereo camera, or the like. Typically, the onboard first surrounding sensing system 60 comprises plurality of units and sensors, such as a set of sensors including lidar, radar, and camera. In this manner, the onboard first surrounding sensing system 60 is configured to detect objects, vehicles and to measure distance and angle between vehicles 10 and surrounding objects, allowing the vehicle to monitor its environment, avoid obstacles, and maintain a safe distance from other vehicles. Any sensor in the set of sensors may be mounted at any suitable location of the autonomous vehicle 10. In one example, the set of sensors comprises at least one 2D Lidar sensor 60a, at least one 3D Lidar sensor 60b, at least one camera unit 60c, or any other suitable sensor. In some examples, the at least one 2D Lidar sensor may be arranged on multiple or all sides of the autonomous vehicle 10, e.g. such that the at least one 2D Lidar sensor is capable of scanning all surroundings of the autonomous vehicle 10. The at least one 3D Lidar sensor may be arranged on the roof of the autonomous vehicle 10 to be able to scan 360 degrees around the autonomous vehicle 10 and/or in the corners of the vehicle 10 to provide about 270 degrees of field of view. The at least one camera unit may comprise one or more different types of camera units arranged in one or more places of the autonomous vehicle 10. The at least one camera unit may comprise a Red, Green, Blue and Depth (RGBD) sensor camera unit which can record the surroundings and account for depth. The at least one camera unit may additionally, or alternatively, comprise any one of one or more infrared cameras, heat cameras, stereo cameras.

The external second surrounding sensing system 50 is configured to determine a geographic location of the vehicle 10 in the confined geographical area 200. The external second surrounding sensing system 50 is configured to determine the geographic location based on a global reference frame, typically latitude, longitude, and sometimes altitude. One example of an absolute positioning system is the Global Navigation Satellite System (GNSS). The GNSS is configured to find the location of the vehicle 10 based on communication with satellites. The GNSS may for example be GPS or any other alternatives, e.g. BeiDou, Galileo, GLONASS, or any other suitable satellite positioning system. GPS utilizes a constellation of satellites orbiting the Earth to provide location information to receivers on the ground.

The external second surrounding sensing system 50 typically comprises one or more satellites, an antenna 51, a signal receiver 53, such as a GPS receiver, arranged in the vehicle 10, and a communication link 52 configured to transfer positioning data streams (positioning signal) between the antenna 51, the signal receiver 53 and the computer system 100.

Moreover, the external second surrounding sensing system 50 is a wireless communication system, which may comprise any suitable wireless device configured to communicate with any number of suitable network entities in a wireless network forming the communication link 52. Based on a signal from the wireless device, such as the GPS receiver 50, the network entities may be able to triangulate the position of the wireless device, and thereby also locate the autonomous vehicle 10, and report the location back to the wireless device. Any other suitable methodology for locating the autonomous vehicle 10 with the use of the wireless network may also apply. For example, this may be any suitable telecommunications positioning methodology, e.g. by using ultra-wide band positioning and triangulation.

Moreover, while GNSS may typically represent the most appropriate technology for the computer system 100, it may also be possible to incorporate RTK (Real-Time Kinematic) to enhance the GNSS system by providing real-time corrections, thereby improving positioning accuracy. Furthermore, the feasibility of employing a positioning system utilizing lidar technology in conjunction with a pre-recorded map may also be conceivable. Such map could be developed using a SLAM (Simultaneous Localization and Mapping) algorithm.

It should be noted that the onboard first surrounding sensing system 60 is typically also configured to be in communication with the external second surrounding sensing system 50.

The vehicle 10 may also include other sensors for motion control and positioning of the vehicle 10 in relation to other vehicles. Examples of such sensors may be ultrasonic sensor, wheel speed sensor, steering angle sensor, and gyroscope.

The vehicles 10 may occasionally encounter various traffic situations and incidents, such as interactions with other vehicles or potential collisions and accidents. Such situations can adversely impact the operations of the vehicles 10. Furthermore, it has been observed that manually operated vehicles frequently collide with autonomous vehicles, potentially causing injuries to passengers in the autonomous vehicles. As described below, the computer system 100 is configured to control at least one vehicle, such as vehicle 10a, in relation to one or more other vehicles, such as vehicles 10b and 10c, within the confined geographical area 200 so as to mitigate effects from collisions between the vehicles 10.

As mentioned herein, the processing circuitry 102 is in communication with one or more surrounding sensing systems 50, 60. The surrounding sensing systems 50, 60 monitor the surrounding environment of the vehicle 10a to detect any adjacent vehicles 10, such as vehicle 10b and vehicle 10c. The processing circuitry 102 is configured to acquire data indicative of the position, speed and trajectory of the vehicles 10 from the surrounding sensing systems, such as the onboard surrounding sensing system 60.

Typically, the processing circuitry 102 is configured to acquire at least motion data for the vehicle 10a and further configured to determine at least a relative position of other vehicle(s) in relation to the vehicle 10a.

For example, in FIG. 2, the processing circuitry 102 is configured to determine a position, speed, and trajectory of the vehicle 10b in relation to a position, speed and trajectory of the vehicle 10a. Such configuration of the processing circuitry 102 can be provided in several different ways. By way of example, the processing circuitry 102 is configured to acquire data indicative of the position, speed, and trajectory of the vehicle 10a. Moreover, the processing circuitry 102 is configured to determine the position, speed and trajectory of the vehicle 10a from the acquired data. Analogously, the processing circuitry 102 is configured to acquire data indicative of the position, speed and trajectory of the adjacent vehicle 10b. Moreover, the processing circuitry 102 is configured to determine the position, speed and trajectory of the adjacent vehicle 10b from the acquired data. Based on the determined position, speed and trajectory of the vehicle 10a and determined position, speed and trajectory of the adjacent vehicle 10b, the processing circuitry 102 determines the position, speed and trajectory of the vehicle 10b in relation to the position, speed and trajectory of the vehicle 10a. As such, the processing circuitry determines the relative position, speed and trajectory of the adjacent vehicle 10b in relation to the position, speed and trajectory of the vehicle 10a.

In one example, the motion data for the vehicle 10a includes at least speed, acceleration, yaw rate, and steering angle. In another example, the motion data for the vehicle 10b includes at least speed, acceleration, yaw rate, and steering angle. The motion data for the vehicle 10b can be transferred to the processing circuitry from surrounding sensing system 60, as described herein.

The processing circuitry 102 may also be configured to determine drivable areas by processing environmental data to exclude areas occupied by other vehicles or objects.

The processing circuitry 102 is further configured to determine that a first collision between the vehicle 10a and the adjacent vehicle 10b is imminent based on the determined positions, speeds and trajectories of the vehicle 10a and the vehicle 10b.

In addition, the processing circuitry 102 is configured to predict an impact level of the first collision on the vehicle 10a. The impact level is here indicative of a predicted effect of the first collision on the vehicle 10a. Typically, the predicted effect is defined by a predicted change in position and speed of the vehicle 10a due to an occurrence of the first collision. Hence, in some examples, the impact level is indicative of a change in position and a change in speed of the vehicle 10a due to predicted occurrence of the first collision. It should be noted that the impact level could reflect either a change in position or speed, or both, as outcomes of the collision. The impact level can also be defined in other ways than in terms of the predicted effect, as described in the examples herein.

Furthermore, the processing circuitry 102 is configured to take into consideration any possible secondary collision between the vehicle 10a and another object in the confined geographical area 200, such as another vehicle, e.g. the vehicle 10c. Hence, the processing circuitry 102 is here also configured to predict at least one potential secondary collision between the vehicle 10a another object, such as a vehicle, e.g. between the vehicle 10a and the vehicle 10c. The secondary collision between the vehicle 10a and the vehicle 10c can be predicted in a similar manner as the first collision between the vehicle 10a and vehicle 10b. Hereby, the processing circuitry 102 is configured to estimate and predict total impact outcomes from the first collision and at least one potential secondary collision before any collision has taken place.

It should be noted that while the secondary collision may refer to a potential collision between the vehicle 10a and any type of object, the examples herein describe a secondary collision between the vehicle 10a and the least another adjacent vehicle 10c.

Also, the processing circuitry 102 is configured to determine at least one alternative trajectory for the vehicle 10a, based on the predicted impact level and any predicted potential secondary collision. For example, the alternative trajectory is a collision-avoidance trajectory. A potential secondary collision typically refers to an additional collision involving the ego vehicle 10a that is likely to occur as a direct or indirect result of the first collision. The first collision is the initial impact between the ego vehicle 10a and the adjacent vehicle 10b, which alters the ego vehicle's position, speed, or trajectory. The secondary collision is predicted based on the ego vehicle's post-impact trajectory, where this altered path may intersect with another object or vehicle in the vicinity, typically leading to an additional imminent collision if no corrective action is taken.

Thus, the first collision typically refers to the initial impact that directly changes the ego vehicle's movement (position, speed, or trajectory), while the secondary collision typically refers to a subsequent collision anticipated along the ego vehicle's new trajectory resulting from the first collision, often involving another nearby vehicle or object. More specifically, the first collision typically refers to the initial impact event between vehicle 10a and the adjacent vehicle 10b, while the term secondary collision typically refers to a subsequent impact event that occurs as a consequence of or in relation to the first collision. The secondary collision is thus dependent on the occurrence of the first collision, implying a cause-and-effect relationship between the two. The subsequent impact event can either be between the vehicle 10a and another adjacent vehicle 10c or between the vehicle 10a and another object, such as a moving object, e.g. a pedestrian.

It should be noted that the processing circuitry 102 is configured to determine the alternative trajectory based on predicted impact level from the first collision and any predicted potential secondary collision. That is, the potential secondary collision is a predicted occurrence of a secondary collision predicted based on the ego vehicle's predicted post-impact trajectory due to the predicted first collision (and predicted impact level) and a position of the detected object (such as vehicle 10c), potentially including the motion of the detected object. More specifically, the processing circuitry 102 is here configured to determine at least one alternative trajectory based on predicted impact level from the first collision and predicted subsequent impact level from a predicted potential secondary collision.

Finally, the processing circuitry 102 is configured control the vehicle 10a based on the determined at least one alternative trajectory. In this example, the processing circuitry 102 is configured control the vehicle 10a based on the determined at least one alternative trajectory to mitigate an effect of the first collision.

In this example, the processing circuitry 102 is configured to control the vehicle 10a based on the determined at least one alternative trajectory prior to the occurrence of the first collision. Typically, the processing circuitry 102 determines the at least one alternative trajectory prior to the occurrence of the first collision, based on the predicted impact level and any predicted potential secondary collision, and also initiate the control of the vehicle 10a towards, or along, the determined alternative trajectory prior to the occurrence of the first collision.

In another example, the processing circuitry 102 is configured to control the vehicle 10a based on the determined at least one alternative trajectory after the occurrence of the first collision, but prior to any secondary collisions.

The vehicle 10a can be controlled towards, or along, the alternative trajectory in several different ways, e.g. through an operation of the brake system and/or the steering system. Hence, the processing circuitry 102 is here also configured to control the vehicle 10a by controlling any one of the brake system and the steering system of the vehicle 10a.

It should be appreciated that the computer system 100 may likewise be configured to control the other vehicles in a similar fashion. For ease of reference, however, an example of the disclosure is described in relation to a control of one vehicle 10, such as the vehicle 10a.

In an extended configuration, the processing circuitry 102 is configured to generate multiple alternative trajectories for the vehicle 10a based on the predicted impact level from the first collision and any predicted potential secondary collision.

In one example, the processing circuitry 102 is configured to select a primary trajectory among the generated multiple alternative trajectories that reduces the impact level from the first collision and the predicted potential secondary collision. Typically, the processing circuitry 102 is configured to select a primary trajectory among the generated multiple alternative trajectories that minimizes the impact level from the first collision and the predicted potential secondary collision.

The predicted impact level of the first collision and a subsequent impact level from the predicted potential secondary collision can be performed in several different ways. For example, the predicted impact level of the first collision and a subsequent impact level from the predicted potential secondary collision is defined as a function of estimated jerk in the vehicle 10a.

In another example, the predicted impact level of the first collision and a subsequent impact level from the predicted potential secondary collision is defined as a function of the number of involved vehicles in the first collision and the predicted potential secondary collision.

In another example, the predicted impact level of the first collision and a subsequent impact level from the predicted potential secondary collision is determined from an estimation of energy generated in the first collision and the predicted potential secondary collision.

In an extended configuration of the computer system 100, the processing circuitry 102 is further configured to evaluate a risk level associated with each of the generated alternative trajectories based on environmental conditions, and to deprioritize trajectories leading the vehicle 10a into an area with limited visibility or unknown conditions, such as behind one of the buildings in FIG. 2.

In another example, the processing circuitry 102 is configured to determine that the first collision between the vehicle 10a and the adjacent vehicle 10b is imminent using historical data indicative of behaviors and capabilities associated with the adjacent vehicle 10b. Historical data indicative of behaviors and capabilities associated with the adjacent vehicle 10b can be stored in the memory of the computer system 100.

It should be noted that while the computer system 100 is here an integral part of the vehicle 10, such as an integral part of the powertrain system 14, the computer system 100 may also be a part of a remote server, such as a central control system, as illustrated in e.g. FIG. 2. In such configuration, the computer system 100 may further be configured to be in communication with one or more corresponding sub-computer systems 100' of the vehicles 10. Hence, in some examples, there is provided a computer system 100 comprising a central control system and a number of vehicles 10, each one of the vehicles having a sub-computer system, and wherein the central control system is configured to be in communication with the sub-computer systems of the vehicles 10 so as to control each vehicle 10 by the configuration of the processing circuitry 102.

It should also be noted that the overall positioning of the vehicle(s) 10 within the confined area 200 is typically controlled by means of one or more vehicle positioning systems, including e.g. an absolute positioning system and a relative positioning system. Such systems are configured to be in cooperation with the computer system 100, and further in cooperation with the other components of the powertrain system 14, such as the propulsion unit (e.g. the electric machine 20) and the steering device(s). Such systems may also partly or fully include the various systems described above in relation to the surrounding sensor systems 50, 60.

The computer system 100 may also be configured to control the transfer of torque from the electric machine 20, i.e. from the powertrain system 14, to the wheels, such as the front wheels 15. The computer system 100 may also be configured to control the transfer of torque from the electric machine 20, i.e. from the powertrain system 14, to one or more wheels, such as the front wheels 15 and the rear wheels 16. By way of example, the computer system 100 is configured to feed torque transfer command to the electric machine 20 to transfer torque to the wheels via the driven axle(s) of the vehicle 10.

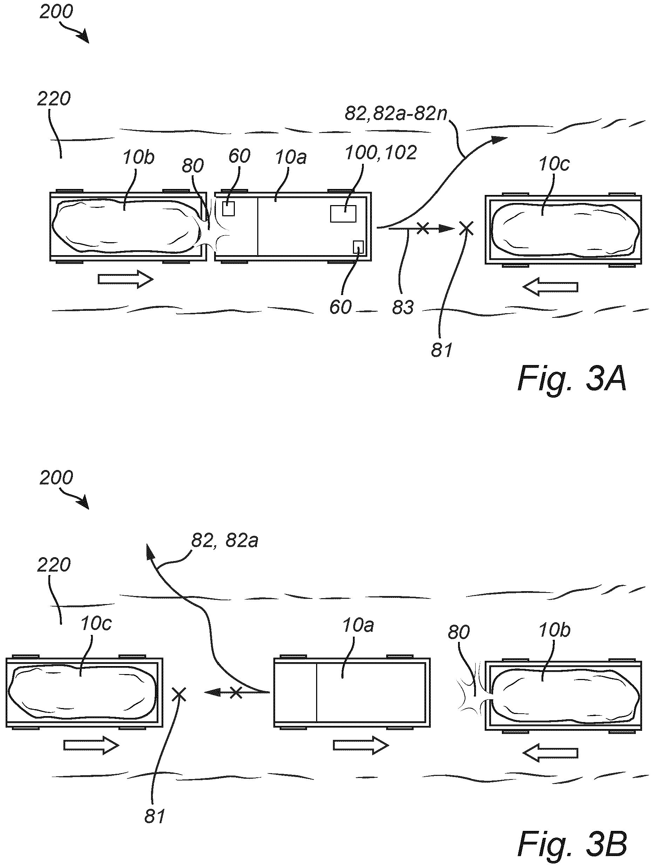

Controlling the vehicle 10a relative to at least one adjacent vehicle, such as the vehicle 10b, based on the determined at least one alternative trajectory is performed in order to mitigate the effect of the first collision. Hereby, there is provided an improved predictive collision management system for the vehicle 10a. FIGS. 3A and 3B illustrate two situations when a control of the vehicle 10a based on the determined at least one alternative trajectory may be particularly useful. In these examples, the vehicle 10a is the autonomous electric vehicle as described in relation to FIGS. 1 and 2.

FIG. 3A shows an example of the autonomous vehicle 10a parked on a road, such as a road defining a part of the vehicle pathway 220 in the confined geographical area 200 of FIG. 2. The vehicle 10a is here the ego vehicle, which is the vehicle under direct control of the computer system 100. The computer system 100 controlling the ego vehicle 10a identifies an approaching vehicle 10b from behind at a high velocity. The approaching vehicle 10b here represents an adjacent vehicle. For example, the ego vehicle is parked in a designated loading zone within the quarry area, waiting for a loading operation to complete. An adjacent heavy equipment vehicle 10b, such as a front loader, maneuvers nearby at low speed and begins to reverse toward the ego vehicle 10a.

As mentioned above, the computer system 100 determines a position, speed and trajectory of the ego vehicle 10a. Moreover, the computer system 100 determines a position, speed and trajectory of the adjacent vehicle 10b.

In this example, the computer system 100 acquires such data from the sensors of the surrounding sensing system 60 arranged on the ego vehicle 10a. The surrounding sensing system 60 continuously monitor the area surrounding the ego vehicle 10a. The computer system 100 gathers data indicative of the positions, speeds, and trajectories of all nearby vehicles, both those approaching the ego vehicle 10a and other vehicles in its vicinity, such as vehicle 10b and vehicle 10c. For example, such data is collected from several different onboard sensors, such as the lidar system, radar system, and cameras. Optionally, the computer system 100 also collects data from offboard sources, including a site monitoring systems, which is an example or a vehicle external surrounding sensor system. Additionally, vehicle-to-vehicle (V2V) information systems may provide data regarding the motion of surrounding vehicles. As such, the computer system 100 identifies that the vehicle 10b is approaching the ego vehicle 10a from behind at a high velocity.

Based on the determined positions, speeds and trajectories of the ego vehicle 10a and the adjacent vehicle 10b, the computer system 100 determines that a first collision 80 between the ego vehicle 10a and the adjacent vehicle 10b is imminent. As such, the computer system 100 determines from the data that a collision is likely unavoidable between the ego vehicle 10a and the adjacent approaching vehicle 10b. For example, the computer system 100 determines that the approaching vehicle 10b will collide with the ego vehicle 10a due to its close proximity and high approach speed.

In one example, the processing circuitry 102 of the computer system 100 uses a collision detection algorithm to determine whether a first collision 80 with the adjacent vehicle 10b is imminent. The collision detection algorithm involves continuously estimating the probability of collision by analyzing the positions, speeds, and trajectories of both the ego vehicle 10a and the other vehicles, such as the adjacent vehicle 10b and adjacent vehicle 10c.

An imminent collision is concluded if the approaching adjacent vehicle 10b is detected to be too close, with a high relative velocity, making a collision unavoidable. In this context, the term "imminent" typically refers to a situation where a collision is highly probable and expected to occur within a short timeframe if no evasive actions are taken. Such determination is based on the real-time assessments of position, speed, and trajectory data of the vehicle 10a and adjacent vehicle(s). The determination can either be based on absolute positions or relative positions. An imminent collision can refer to various situations. For example, if the ego vehicle 10a is following another vehicle 10 in a confined space and the adjacent vehicle suddenly decelerates, the computer system 100 might determine that a collision is imminent because the following distance is too short for the ego vehicle 10 to stop safely at its current speed. Another example may relate to a situation when the ego vehicle 10a is standing still, or driving slow, and another vehicle 10b is approaching from behind. Alternatively, if two vehicles 10 are approaching an intersection from perpendicular directions within a confined area and the computer system 10 detects that, based on their trajectories, they are likely to collide, it would classify the collision as imminent. Such determination could occur when both vehicles are within a defined distance and time threshold of impact. Alternatively, if an adjacent vehicle starts to drift into the lane of the ego vehicle 10a, and the computer system 100 predicts based on speed and trajectory that a collision is likely within seconds, it may classify the collision as imminent.

In one example, the computer system 100 compares the determined positions, speeds and trajectories of the ego vehicle 10a and the adjacent vehicle 10b with reference values stored in the memory, wherein the computer system 100 determines that a first collision 80 between the ego vehicle 10a and the adjacent vehicle 10b is imminent if the determined positions, speeds and trajectories of the ego vehicle 10a and the adjacent vehicle 10b conflict with the reference values.

The computer system 100 may also employ historical data on typical behaviors and capabilities of the other vehicle types, including data indicative of e.g. maximum acceleration, minimum acceleration and steering capacity. Such data may be used to further refine the prediction of the future trajectories of the vehicles 10b and 10c.

The computer system 100 may also consider other vehicle parameters such as maximum braking and steering capabilities of the approaching adjacent vehicle 10b. Hence, the computer system 100 may predict maximum braking and steering capabilities of the approaching adjacent vehicle 10b.

Upon detecting the imminent collision, the computer system 100 predicts an impact level from the first collision 80. As mentioned above, the impact level is a parameter indicative of a predicted effect of the first collision 80 on the ego vehicle 10a.

The impact level can be determined in several different ways and may include various data. For example, the impact level may be determined based on a relative velocity between the ego vehicle 10a and the colliding vehicle 10b. In addition, or alternatively, the impact level may be determined based on predicted change in position and speed of the vehicle due to the occurrence of the first collision. In addition, or alternatively, the impact level may be determined based on a predicted position of the impact on the ego vehicle 10a. In addition, or alternatively, the impact level may be determined based on a predicted angle of the first collision 80 relative to the orientation of the ego vehicle 10a. In addition, or alternatively, the impact level may be determined based on a predicted rate of change of acceleration, also referred to as jerk, experienced during the first collision 80. In addition, or alternatively, the impact level may be determined based on a predicted generation of energy due to the first collision 80.

In one example, the impact level may be determined by combining several parameters, including the relative velocity between the ego vehicle 10a and the colliding vehicle 10b, the predicted position of the impact on the ego vehicle 10a, the predicted angle of the collision 80 relative to the ego vehicle's orientation, the predicted jerk experienced during the first collision 80, and the predicted generation of energy resulting from the first collision 80. By taking all these factors into account, the computer system 100 can predict a more comprehensive impact level that reflects the collision's overall effect on the ego vehicle 10a.

As such, the purpose of predicting the impact level is to guide the computer system 100 in evaluating and executing control actions aimed at minimizing, or at least reducing, the severity of the impact. Such process may involve assessing alternative responses independently of whether the impact level is low, medium, or high. To this end, the computer system 100 is configured to proactively estimate one or more parameters affecting the impact level for the purpose of predicting an alternative trajectory of the vehicle 10a prior to the occurrence of the first collision 80.

It should be noted that while the impact level may classify collision severity, such as low, medium, or high, based on predicted changes to the ego vehicle's trajectory, jerk, and collision dynamics, the impact level may in some examples be predicted to be higher even if the position and speed of the ego vehicle remain unchanged, such as in scenarios where the ego vehicle is applying maximum braking force, causing deformation zones of the vehicle to absorb the majority of the collision force. Conversely, an impact scenario with greater changes in speed and position may still result in a lower impact level if the forces involved are distributed differently. The impact level may also consider scenarios where high jerk values indicate abrupt deceleration during a collision, even if the ego vehicle's position or speed remains relatively unchanged. For example, the vehicle may remain stationary while absorbing impact forces through its deformation zones.

In one example, the computer system 100 compares the predicted impact level with a threshold reference value of an acceptable impact level. If the predicted impact level exceeds the threshold, the computer system 100 determines that the impact level amounts to an impact level requiring a precautionary action. One type of precautionary action is to determine an alternative trajectory for the vehicle 10a.

Given the predicted impact level, the computer system 100 generates multiple alternative trajectories 82a to 82n that aim to bring the ego vehicle 10a to a safe state, factoring in the potential for secondary collisions.

As such, the computer system 100 determine at least one alternative trajectory for the ego vehicle 10a based on the predicted impact level and a predicted potential secondary collision.

In FIG. 3A, the alternative trajectory for the ego vehicle 10a is indicated by reference numeral 82. In addition to determining the alternative trajectory 82 for the ego vehicle 10a based on the predicted impact level, as described above, the processing circuitry 102 also evaluates the alternative trajectory 82 for its ability to minimize, or at least reduce, the cumulative impact levels from both the initial and any potential secondary collisions. In FIG. 3A, a potential secondary collision is indicated by reference numeral 81, which would occur if the ego vehicle 10a follows trajectory 83 toward vehicle 10c. In this example, trajectory 83 represents the predicted path of the ego vehicle 10a resulting from the first collision 80, assuming no intervention is performed by the computer system 100.

A potential secondary collision 81 is here predicted by the computer system 100 analyzing the trajectory of the ego vehicle 10a following the initial collision 80, along with determining the surrounding vehicles' positions, speeds, and trajectories. Moreover, an impact level from the secondary collision 81 is predicted, which herein may be denoted as a subsequent impact level. The secondary collision 81 is here predicted to occur between the ego vehicle 10a and the adjacent vehicle 10c.

For example, assuming that the ego vehicle 10a is operating within a confined area of a quarry and is stationary or moving slowly near a parked vehicle 10b. An adjacent vehicle 10b, such as a dump truck, is approaching at a moderate speed and is predicted to collide with the ego vehicle 10a due to its trajectory. The computer system 100 identifies this initial collision (first collision 80) and anticipates the ego vehicle 10a will be pushed off its original path due to the impact from the first collision 80. Upon predicting the first collision 80, the computer system 100 predicts (calculates) a post-impact trajectory 83 for the ego vehicle. Such trajectory 83 represents how the ego vehicle 10a is likely to move after being struck by the vehicle 10b, factoring in the predicted changes in position and speed caused by the first collision. The computer system 100 then evaluates the new trajectory 83 against the positions, speeds, and trajectories of other vehicles 10 within the area 200. Optionally, the computer system 100 also evaluates the new trajectory 83 against the positions of any other actors and objects in the area 200. For instance, if there is another vehicle 10c nearby, such as a hauler moving across the predicted path of the ego vehicle's post-impact trajectory 83, the computer system 100 assesses whether the ego vehicle's new path will bring it into the path of vehicle 10c. If the computer system 100 determines that the predicted trajectory 83 will cause the ego vehicle 10a to cross into the path of vehicle 10c at a point where both vehicles 10a, 10c will occupy the same space, the computer system 100 here predicts a potential secondary collision 81 due to such projected intersection. Moreover, the computer system 100 predicts an impact level of the secondary collision on the ego vehicle 10a. The impact level of the secondary collision 81 on the ego vehicle 10a can be determined in a similar way as the impact level of the first collision 80. The impact level from the first collision 80 and the subsequently impact level from the secondary collision 81 typically defines the cumulative impact, as referred to as the total impact.

Based on the risk of the secondary collision 81, the computer system 100 evaluates alternative trajectories 82a to 82n that would divert the ego vehicle 10a away from vehicle 10c, minimizing the cumulative impact levels from both the initial first collision 80 and the predicted secondary collision(s) 81.

In this example, the predicted alternative trajectory 82 is determined based on the change in the position of the ego vehicle 10a and change in velocity due to the initial first collision 80. Such prediction can account for the impact's relative velocity and the collision's angle and direction, e.g., whether it is from the side or behind the ego vehicle 10a. To calculate potential alternative trajectories, the processing circuitry 102 may typically apply one or more equations, such as an equation configured to determine conservation of linear momentum. Such equations belong to common general knowledge and are thus not further described herein.

Accordingly, based on the predicted impact level and the predicted potential secondary collision 81, the computer system 100 determines at least one alternative trajectory 82. Typically, the processing circuitry 102 evaluates a plurality of alternative trajectories 82a to 82n to assess risk levels associated with each option. Trajectories that involve moving into areas with limited visibility or unknown conditions are typically also deprioritized in favor of trajectories offering greater situational awareness. For example, each alternative trajectory 82a to 82n is evaluated for its ability to reduce the cumulative impact levels from both the first and the secondary collision. Such evaluation may consider metrics such as estimated jerk (m/s³) in each vehicle 10a, 10b, 10c involved in the first collision, and optionally the second collision. The computer system 100 may here prioritize the trajectory that minimizes the total jerk experienced by all vehicles 10. For instance, a trajectory that results in a more intense first collision 80 but fewer or less severe secondary collisions 81 may be preferable. The processing circuitry 102 may also perform an evaluation for minimizing the number of vehicles involved, or limit maximum jerk by redistributing impact across vehicles 10.

As such, the processing circuitry 102 is configured to evaluate the alternative trajectories 82a to 82n in several different ways, including e.g. any one of predicting impact level of the first collision and the subsequent impact level from the potential secondary collision as a function of estimated jerk in the vehicle, predicting impact level of the first collision and the subsequent impact level from the potential secondary collision as a function of the number of involved vehicles in the first collision and the predicted potential secondary collision and predicting impact level of the first collision and the subsequent impact level from the potential secondary collision from an estimation of energy generated in the first collision and the predicted potential secondary collision.

Subsequently, the computer system 100 controls the ego vehicle 10a according to the selected alternative trajectory 82. The control of the ego vehicle 10a here involves an actuation of the braking and steering systems, potentially including adjustments such as applying brakes harder or following a time series of commands to execute the selected alternative trajectory 82. Such control of the ego vehicle 10a may also involve continuous control adjustments based on real-time feedback from the surrounding sensing system 50, 60.

It should be noted that the selection of an alternative trajectory 82 may include several different options such as applying the brake systems immediately to reduce forward movement upon impact, thereby limiting the potential for secondary collisions, releasing brake system before the collision, then reapplying post-impact if there are no vehicles in front, thus reducing initial collision force; or steering to an open area if available to avoid additional impacts. In FIG. 3A, the computer system 100 selects the alternative trajectory 82 of steering to an open area. In another example, the computer system 100 analyzes the surrounding environment and selects the option of applying the brake system since it offers the highest chance of limiting impact severity with other nearby objects. In such configuration, the vehicle 10a is controlled to actuate the brake system to reduce the effects of the collision. Additionally, the computer system 100 may evaluate a resulting end position of the ego vehicle 10a to avoid creating dangerous future situations. For example, if an alternative trajectory 82 would cause the ego vehicle 10a to end up stationary in an adjacent lane, even one currently free of vehicles, this could result in a hazardous situation if oncoming traffic later appears. In such cases, the computer system 100 may be configured to prioritize selecting an alternative trajectory 82 that minimizes not only immediate collision effects, but also potential future risks associated with the ego vehicle's predicted end position.

In other words, the processing circuitry 102 controls the autonomous vehicle 10a by applying actuation based on a determination that a first collision with another adjacent vehicle 10b is imminent. The processing circuitry 102 gathers data from the surrounding environment and predicts an impact level of an initial first collision, and potential secondary collisions to determine alternative trajectories 82a to 82n and mitigate collision effects with other vehicles 10. More specifically, based on the predictive information, the computer system 100 determines alternative trajectories 82a to 82n to mitigate the effects of the imminent first collision 80, as well as the risk of subsequent secondary collisions 81.

In FIG. 3A, the processing circuitry 102 generates multiple alternative trajectories 82a to 82n for the ego vehicle 10a based on the predicted impact level from the first collision 80 and the predicted impact level from the potential secondary collision 81. Then, the processing circuitry 102 selects a primary trajectory corresponding to the alternative trajectory 82 among the generated multiple alternative trajectories 82a to 82n that minimizes the impact level from the first collision 80 and the predicted potential secondary collision 81. However, in other examples, the processing circuitry 102 generates multiple alternative trajectories 82a to 82n for the ego vehicle 10a based on the predicted impact level from the first collision 80 and the predicted impact level from the potential secondary collision 81, and then selects a primary trajectory from among the generated multiple alternative trajectories 82a to 82n that at least reduces the impact level from the first collision and the predicted potential secondary collision to an appropriate threshold value.

Moreover, in FIG. 3A, the computer system 100 determines to control the ego vehicle 10a based on the determined alternative trajectory 82 prior to the occurrence of the first collision 80. By calculating and initiating an alternative trajectory 82 before the first collision 80 occurs, the computer system 100 has a greater likelihood of reducing or completely avoiding the impact. Such proactive approach allows the ego vehicle 10a to adjust its path, speed, or positioning in advance, potentially moving it away from the collision(s) or minimizing the severity of the collision(s).

Alternatively, the computer system 100 determines to control the ego vehicle 10a based on the determined at least one alternative trajectory 82 after the occurrence of the first collision 80, but prior to any secondary collisions 81. After the first collision 80, the ego vehicle 10a may be destabilized or diverted from its intended path. By promptly initiating an alternative trajectory 82 before any secondary collisions can occur, the computer system 100 helps the vehicle 10a regain control and avoid additional impacts. Such configuration of the computer system 100 may be useful in environments with multiple moving vehicles or obstacles, where a secondary collision is highly probable if corrective action is not taken swiftly.

In some examples, the computer system 100 may be configured to perform the operation of monitoring the surrounding environment of the vehicle 10a to detect at least one adjacent vehicle in collaboration with at least one surrounding sensing systems 50, 60. In a similar way, the computer system 100 may be configured to perform the operation of monitoring the surrounding environment of each one of the vehicles 10 in the confined geographical area 200 to detect adjacent vehicles. Such configuration may be applicable when the computer system 100 is configured to control a plurality of vehicles 10 in the confined geographical area 200.

While described here in the context of an autonomous vehicle, the computer system may also be adapted for use with manually operated vehicles. In such cases, the computer system 100 may rely on slightly different data acquisition methods, for example, sensors configured to assist rather than replace human drivers, while using real-time trajectory adjustments based on the operator's actions rather than planned autonomous trajectories. For manual vehicles, the processing circuitry 102 can be configured to temporarily take control for a short period to perform specific types of actuation, such as overriding the braking system or steering mechanisms.

FIG. 3B schematically illustrates another example, in which the autonomous vehicle 10a is driving along a road, such as a lane within the vehicle pathway 220 in the confined geographical area 200 depicted in FIG. 2. The vehicle 10a is the ego vehicle. The computer system 100 controlling the ego vehicle 10a identifies an adjacent vehicle 10b traveling ahead in the same lane at a lower speed. Due to its higher speed, the ego vehicle 10a is at risk of colliding with the adjacent vehicle 10b. Additionally, the computer system 100 detects another adjacent vehicle 10c approaching from behind at a significant speed, presenting the potential for a secondary collision 81 if the ego vehicle 10a collide with the vehicle 10, which may cause the ego vehicle 10a to decelerate abruptly or to divert from its lane.

As in previous examples, the computer system 100 determines the position, speed, and trajectory of both the ego vehicle 10a and the adjacent vehicles 10b and 10c.

In this example, the computer system 100 acquires such data from the sensors within the surrounding sensing system 60 on the ego vehicle 10a. The surrounding sensing system 60 continuously monitors the area surrounding the ego vehicle 10a. The computer system 100 gathers data indicative of the positions, speeds, and trajectories of nearby vehicles, including vehicle 10b in front of the ego vehicle 10a and vehicle 10c approaching from behind. For instance, this data is collected from multiple onboard sensors, such as the LIDAR system, radar, and cameras. Optionally, the computer system 100 may also collect data from offboard sources, such as a site monitoring system (serving as an external surrounding sensing system) and vehicle-to-vehicle (V2V) information systems, which may provide information on the motion of surrounding vehicles.

Based on the positions, speeds, and trajectories of the ego vehicle 10a and the adjacent vehicle 10b, the computer system 100 determines that a first collision 80 between the ego vehicle 10a and the adjacent vehicle 10b is imminent. For example, the computer system 100 may determine that the higher speed of the ego vehicle 10a relative to vehicle 10b will result in a collision, given the close following distance and trajectory.

In one example, the processing circuitry 102 of the computer system 100 utilizes a collision detection algorithm to determine the imminence of the first collision 80 with the adjacent vehicle 10b. The collision detection algorithm continuously estimates the probability of collision by analyzing the positions, speeds, and trajectories of the ego vehicle 10a and the surrounding vehicles, such as adjacent vehicles 10b and 10c.

The computer system 100 concludes that a collision is imminent if vehicle 10b is detected to be too close with a high relative velocity of the ego vehicle 10a, making a collision unavoidable.

Upon detecting the imminent collision, the computer system 100 predicts an impact level for the first collision 80, indicating the likely change in position and speed of the ego vehicle 10a post-impact. Such impact level provides a metric of collision severity and assists the computer system 100 in planning an appropriate response.

For example, the computer system 100 may classify the impact level of the first collision 80 as low, moderate, or high, based on the relative speed of the ego vehicle 10a and the adjacent vehicle 10b.

Based on the predicted impact level, the computer system 100 generates multiple alternative trajectories 82a to 82n designed to minimize the effects of the first collision 80 and reduce the risk of a secondary collision with vehicle 10c approaching from behind.

In FIG. 3B, an alternative trajectory for the ego vehicle 10a is indicated by reference numeral 82. In addition to determining the alternative trajectory 82 for the ego vehicle 10a based on the predicted impact level from a first collision 80, the processing circuitry 102 evaluates the alternative trajectory 82 for effectiveness in minimizing cumulative impact from both the first collision 80 and a predicted potential secondary collision 81.

In this example, a potential secondary collision 81 is predicted by the computer system 100 by analyzing the post-impact trajectory of the ego vehicle 10a following the first collision 80. The post-impact trajectory is here an example of the predicted impact level from the first collision 80. Moreover, the computer system 100 evaluates the surrounding vehicles' positions, speeds, and trajectories to determine whether vehicle 10c, approaching from behind, will intersect with the ego vehicle's post-collision path, thereby predicting a potential secondary collision 81.

Based on the predicted potential secondary collision 81, including e.g. predicting the risk of a secondary collision 81 and impact level from the secondary collision 81 on the vehicle 10a, the computer system 100 evaluates alternative trajectories 82a to 82n to divert the ego vehicle 10a away from vehicle 10c, minimizing cumulative impacts (total impact) from both the first and predicted secondary collisions 80, 81.

Accordingly, based on the predicted impact level and potential secondary collision 81, the computer system 100 determines at least one alternative trajectory 82, typically selecting the trajectory that minimizes the total impact level from both the first and secondary collisions 80, 81.

The computer system 100 then controls the ego vehicle 10a according to the selected alternative trajectory 82. Such control may involve actuation of braking system and steering system, potentially with continuous adjustments based on real-time feedback from the surrounding sensing system 50, 60.

It should also be noted that, in one example, the processing circuitry 102 may evaluate impact forces (impact level) by focusing on minimizing predicted peak force rather than simply assessing the total force. For example, if one generated alterative trajectory 82a results in a single collision with an impact force from the first collision 80 of about 80 kN, while another generated alterative trajectory 82b results in two collisions with an impact force of 50 kN each, the processing circuitry 102 may prioritize the alterative trajectory 82b despite the higher cumulative force.

The disclosure may equally be applicable in situations involving only a single collision, as the processing circuitry 102 is configured to evaluate multiple alternative trajectories 82a to 82n and select an alternative trajectory 82 among the multiple alternative trajectories 82a to 82n that results in the least possible impact force based on the predicted impact level of the predicted first collision 80 and any potential secondary collision. For instance, if the vehicle 10a is stationary and at risk of being impacted from the rear, the processing circuitry 102 may select an alternative trajectory 82 in which the brake system is released to reduce the severity of the first collision. Such a response can be implemented in cases where no obstacles are detected ahead of the vehicle 10a or where an obstacle is present, but the processing circuitry 102 determines that two smaller collisions are preferable to a single, more severe collision. In another example, the vehicle 10a may be stationary and at risk of being impacted from the rear, while no obstacles are detected ahead. In such situation, the processing circuitry 102 may select an alternative trajectory 82 in which the brake system is released, while the speed is slightly increased to reduce the force of the collision.

In FIG. 3B, the computer system 100 determines to control the ego vehicle 10a based on the determined alternative trajectory 82 after the first collision 80 has occurred but before any potential secondary collision 81 with vehicle 10c. By adjusting the vehicle's path after the initial collision, the computer system 100 can prevent or reduce the severity of the secondary impact.

As mentioned above, a potential secondary collision 81 is predicted by the computer system 100 by analyzing the post-impact trajectory of the ego vehicle 10a following the first collision 80. In another example, the surrounding sensing system 60 may take into account additional elements in the surrounding area, including road infrastructure such as intersections, walk paths, and railroad crossings, in the analysis of the secondary collision. Such information can further refine the trajectory prediction, ensuring the ego vehicle 10a avoids critical infrastructure areas or high-risk zones while mitigating the potential for secondary impacts.

As such, similar to the configuration of the processing circuitry 102 to predict the impact level of the first collision on the vehicle 10a., the processing circuitry 102 is typically configured to predict impact level of the secondary collision on the vehicle 10a. The impact level of the secondary collision on the vehicle 10a is here indicative of a change in position and a change in speed of the vehicle 10a due to an occurrence of the secondary collision. It should be noted that the impact level could reflect either a change in position or speed, or both, as outcomes of the collision.

It should be noted that the processing circuitry 102 may also be configured to obtain topology data from a number of data sources, such as digital maps, GPS data, or geographic information system (GIS) databases. These sources may generally include relevant information about the road network, including roads, elevation data, inclination data, and potential destinations. In one example, the topology data is received by the processing circuitry 102 from a route planner system of the computer system 100 and/or the vehicle 10. In other examples, the topology data is obtained from previous transport missions along the planned route.

It should be noted that the processing circuitry 102 is typically configured to obtain real-time positioning data and/or vehicle data from all vehicles 10 within the confined geographical area 200. In addition, or alternatively, the processing circuitry 102 obtains real-time positioning data and/or vehicle data for all vehicles from the central control server, which is arranged in communication with the processing circuitry 102.

The above examples in relation to FIGS. 3A and 3B are only brief examples of the disclosure for the ease of describing and illustrating the operations of the proposed computer system 100 and the methods herein.

It should also be noted that the computer system 100 of FIGS. 1 to 3B may likewise be a part of a remote server (i.e. the central server), while further being configured to be in communication with one or more corresponding computer systems 100' of the vehicle 10. The remote server is e.g. a centralized controller. Alternatively, or in addition, the processing circuitry 102 may be arranged in the central control system (part of the computer system 100) for the vehicles 10 and the confined geographical area 200.

As such, in an example where the computer system 100 is arranged, partly or entirely, in the remote server, e.g. as a central control system (part of the computer system 100) for the vehicles 10, the processing circuitry 102 is configured to collect data from the vehicles 10 on the site within the confined geographical area 200 via e.g. the wireless interface 52.

The processing circuitry 102 is also configured to perform the above operations for all vehicles involved in the first collision 80 and any secondary collisions 81 between vehicles 10. Hence, for each vehicle 10, the processing circuitry 102 is configured to select a primary trajectory from among the generated multiple alternative trajectories 82a to 82n that minimizes the impact level from the first collision and the predicted potential secondary collision between vehicles 10 potentially involved in the collisions.

To this end, the parts of the computer system 100, including one or more processing circuitry and control units, may be comprised in a single vehicle 10, in a plurality of vehicles 10 and/or be comprised in any other suitable location. The processing circuitry 102 of the computer system 100 may be communicatively connected with the surrounding sensor systems 50, 60, including any one of one or more sensors of the vehicles 10, sensors within the confined geographical area 200, the GNSS, and the wireless network 52.

The processing circuitry 102 may further be able to actuate the navigation of the autonomous vehicles 10, or at least be able to provide commands to the autonomous vehicles 10. The processing circuitry 102 may also be configured to feed additional motion commands to the vehicle 10 for realizing the route associated with the transport mission.

Optionally, in an extended example, the processing circuitry 102 may further be configured to receive road topography data. The road topography data includes information about the road's elevation, slope, curvature, and other geometric features. Road topography data is for example acquired by the surrounding sensor systems, such as the onboard sensors (lidar system and radar system) and the GPS, as mentioned herein. The surrounding sensor systems may be integral parts of a vehicle positioning system including e.g. an absolute positioning system and a relative positioning system, which may be integral parts of an Autonomous Driving Systems.

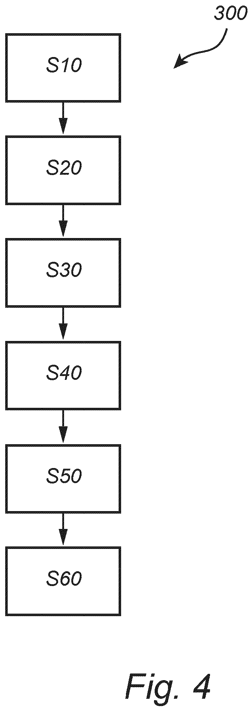

FIG. 4 is a flow chart of an exemplary method to control an autonomous vehicle 10 according to an example. More specifically, FIG. 4 is an exemplary computer implemented method 300 according to an example. Thus, the method 300 is implemented by the computer system 100 and the processing circuitry 102, as described herein. The computer-implemented method 300 is intended for controlling the autonomous vehicle 10a relative to one or more adjacent vehicles 10b, 10c operating in the confined geographical area 200. For example, the method 300 is intended for controlling the autonomous vehicle 10a within the confined geographical area 200 in FIG. 2, and/or as described in relation to FIGS 3A and 3B.

As illustrated in FIG. 4, the method 300 comprises a step S10 of determining, by processing circuitry 102 of the computer system 100, a position, speed, and trajectory of the adjacent vehicle 10b relative to a position, speed, and trajectory of the vehicle 10a.

Optionally, the method 300 comprises a step S20 of determining, by the processing circuitry 102 of the computer system 100, the position, speed and trajectory of the vehicle 10a and the position, speed and trajectory of the adjacent vehicle 10b, and then comparing the position, speed and trajectory of the vehicle 10a with the position, speed and trajectory of the adjacent vehicle 10b so as to determine the position, speed and trajectory of the adjacent vehicle 10b relative to the position, speed and trajectory of the vehicle 10a. In other examples, the processing circuitry 102 may be configured to directly determine the relative position, speed and trajectory between the vehicle 10a and the adjacent vehicle 10b using the surrounding sensing system 50, 60.

In addition, the method 300 comprises a step S30 of determining, by the processing circuitry 102 of the computer system 100, that a first collision between the autonomous vehicle 10a and the adjacent vehicle 10b is imminent based on the determined position, speed and trajectory of the at least one adjacent vehicle 10b relative to the position, speed and trajectory of the vehicle 10a.

Also, the method 300 comprises a step S40 of predicting, by the processing circuitry 102 of the computer system 100, the impact level of the first collision on the vehicle 10a. The impact level is indicative of a predicted effect of the first collision on the vehicle 10a, such as a predicted effect defined by a predicted change in position and speed of the vehicle 10a due to the occurrence of the first collision.

Furthermore, the method 300 comprises a step S50 of determining, by the processing circuitry 102 of the computer system 100, at least one alternative trajectory for the vehicle 10a based on the predicted impact level and any predicted potential secondary collision.

Subsequently, the method 300 comprises a step S60 of controlling, by the processing circuitry 102 of the computer system 100, the vehicle 10a based on the determined at least one alternative trajectory. The step S60 of controlling the vehicle 10a based on the determined at least one alternative trajectory is performed to mitigate the effects of the first collision.

By predicting impact level from the first collision on the vehicle 10 and predicting subsequent impact level from the potential secondary collision on the vehicle 10, the method 300 (and computer system 100) is configured to predict total impact outcomes from both first and potential secondary collisions before any collision has taken place. Moreover, the method 300 (and computer system 100) is configured to determine the at least one alternative trajectory for the autonomous vehicle 10a, based on the total impact from the first and secondary collisions, before any collision has taken place.

As mentioned herein, determining at least one alternative trajectory for the autonomous vehicle based on the predicted impact level and a predicted potential secondary collision between the vehicle 10a and at least one adjacent object comprises determining at least one alternative trajectory for the vehicle 10a based on the predicted impact level and a predicted potential secondary collision between the vehicle 10a and at least one adjacent stationary object. Stationary objects may be walls, guardrails, traffic signs, poles, and traffic lights. Alternatively, determining at least one alternative trajectory for the autonomous vehicle based on the predicted impact level and a predicted potential secondary collision between the autonomous vehicle and at least one adjacent object comprises determining at least one alternative trajectory for the autonomous vehicle based on the predicted impact level and a predicted potential secondary collision between the autonomous vehicle and at least one adjacent moving object. Moving objects may refer to other vehicles, pedestrians, cyclists, and animals. In one example, determining at least one alternative trajectory for the autonomous vehicle based on the predicted impact level and a predicted potential secondary collision between the autonomous vehicle and at least one adjacent object refers to determining at least one alternative trajectory for the autonomous vehicle based on the predicted impact level and a predicted potential secondary collision between the autonomous vehicle 10a and at least another adjacent vehicle 10c. As such, the term adjacent object refers to any item or entity in proximity to the autonomous vehicle that could be impacted in a secondary collision and that could be detected by the surrounding sensing system 50.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system usable as the computer system 100 will now be described in relation to FIG. 5.

FIG. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 100 for controlling a vehicle 10, 10a relative to at least one adjacent vehicle 10, 10b, 10c operating within a confined geographical area 200, the computer system comprising processing circuitry 102 configured to: determine a position, speed and trajectory of the at least one adjacent vehicle relative to a position, speed and trajectory of the vehicle; determine that a first collision 80 between the vehicle and the at least one adjacent vehicle is imminent based on the determined position, speed and trajectory of the at least one adjacent vehicle relative to the position, speed and trajectory of the vehicle; predict an impact level of the first collision on the vehicle, the impact level being indicative of a predicted effect of the first collision on the vehicle; determine at least one alternative trajectory for the vehicle based on the predicted impact level and any predicted potential secondary collision between the vehicle and at least one adjacent object; and control the vehicle based on the determined at least one alternative trajectory.

Example 2: The computer system of example 1, wherein the processing circuitry is configured to generate multiple alternative trajectories for the vehicle based on the predicted impact level from the first collision and any predicted potential secondary collision.

Example 3: The computer system of example 2, wherein the processing circuitry is configured to select a primary trajectory from among the generated multiple alternative trajectories that reduces the impact level from the first collision and any predicted potential secondary collision.

Example 4: The computer system of example 3, wherein the processing circuitry is configured to select a primary trajectory from among the generated multiple alternative trajectories that minimizes the impact level from the first collision and any predicted potential secondary collision.

Example 5: The computer system of example 3 or example 4, wherein the predicted impact level of the first collision and a subsequent impact level from any predicted potential secondary collision is defined as a function of estimated jerk in the vehicle.

Example 6: The computer system of any previous examples 3 to 5, wherein the predicted impact level of the first collision and a subsequent impact level from any predicted potential secondary collision is defined as a function of the number of involved vehicles in the first collision and in at least one predicted potential secondary collision.

Example 7: The computer system of any previous examples 3 to 6, wherein the predicted impact level of the first collision and a subsequent impact level from the predicted potential secondary collision is determined from an estimation of energy generated in the first collision and any predicted potential secondary collision.

Example 8: The computer system of any previous examples 3 to 7, wherein the processing circuitry is further configured to evaluate a risk level associated with each of the generated alternative trajectories based on environmental conditions, and to deprioritize trajectories leading the vehicle into an area with limited visibility or unknown conditions.

Example 9: The computer system of any previous examples, wherein the processing circuitry is configured to control the vehicle based on the determined at least one alternative trajectory prior to the occurrence of the first collision.

Example 10: The computer system of any previous examples, wherein the processing circuitry is configured to control the vehicle based on the determined at least one alternative trajectory after the occurrence of the first collision, but prior to any secondary collisions.

Example 11: The computer system of any previous examples, wherein the processing circuitry is configured to control the vehicle by controlling any one of a brake system and steering system of the vehicle.

Example 12: The computer system of any previous examples, wherein the processing circuitry is further configured to determine that the first collision between the vehicle and the at least one adjacent vehicle is imminent using historical data indicative of behaviors and capabilities associated with the at least one adjacent vehicle.

Example 13: The computer system of any previous examples, wherein the processing circuitry is configured to acquire data indicative of the position, speed and trajectory of the at least one adjacent vehicle, and configured to determine the position, speed and trajectory of the at least one adjacent vehicle from the acquired data, and/or wherein the processing circuitry is configured to acquire data indicative of the position, speed and trajectory of the vehicle, and configured to determine the position, speed and trajectory of the vehicle from the acquired data.

Example 14: The computer system of example 13, wherein the processing circuitry is configured to acquire data from a surrounding sensing system configured to acquire positional and movement-related information of any one of the vehicle, the at least one adjacent vehicle, and the at least one object.

Example 15: The computer system of example 14, wherein the surrounding sensing system is configured to continuously monitor a surrounding environment of the vehicle.

Example 16: The computer system of any previous examples 14 to 15, wherein the surrounding sensing system comprises any one of a radar system, a lidar system, a camera and a vehicle-to-vehicle information system.

Example 17: A vehicle 10, such as an autonomous vehicle, comprising a computer system of any of the examples 1-16.

Example 18: A computer-implemented method 300 for controlling an vehicle 10 relative to at least one adjacent vehicle operating within a confined geographical area 200, the method comprising: determining S10, by processing circuitry of a computer system, a position, speed and trajectory of the at least one adjacent vehicle relative to a position, a speed and a trajectory of the vehicle; determining S30, by the processing circuitry of the computer system, that a first collision between the vehicle and the at least one adjacent vehicle is imminent based on the determined position, speed and trajectory of the at least one adjacent vehicle relative to the position, speed and trajectory of the vehicle; predicting S40, by the processing circuitry of the computer system, an impact level of the first collision on the vehicle, the impact level being indicative of a predicted effect of the first collision on the vehicle; determining S50, by the processing circuitry of the computer system, at least one alternative trajectory for the vehicle based on the predicted impact level and any predicted potential secondary collision between the vehicle and at least one adjacent object; and controlling S60, by the processing circuitry of the computer system, the vehicle based on the determined at least one alternative trajectory.

Example 19: A computer program product comprising program code for performing, when executed by the processing circuitry 102, the method of example 18.

Example 20: A non-transitory computer-readable storage medium comprising instructions, which when executed by the processing circuitry, cause the processing circuitry to perform the method of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for controlling a vehicle (10, 10a) relative to at least one adjacent vehicle (10, 10b) operating within a confined geographical area (200), the computer system comprising processing circuitry (102) configured to:
- determine a position, speed and trajectory of the at least one adjacent vehicle relative to a position, speed and trajectory of the vehicle;
- determine that a first collision (80) between the vehicle and the at least one adjacent vehicle is imminent based on the determined position, speed and trajectory of the at least one adjacent vehicle relative to the position, speed and trajectory of the vehicle;
- predict an impact level of the first collision on the vehicle, the impact level being indicative of a predicted effect of the first collision on the vehicle;
- determine at least one alternative trajectory (82, 82a to 82n) for the vehicle based on the predicted impact level and any predicted potential secondary collision (81) between the vehicle and at least one object (10c); and
- control the vehicle based on the determined at least one alternative trajectory.

2. The computer system of claim 1, wherein the processing circuitry is configured to generate multiple alternative trajectories for the vehicle based on the predicted impact level from the first collision and any predicted potential secondary collision.

3. The computer system of claim 2, wherein the processing circuitry is configured to select a primary trajectory from among the generated multiple alternative trajectories that reduces the predicted impact level from the first collision and any predicted potential secondary collision, preferably, wherein the processing circuitry is configured to select a primary trajectory from among the generated multiple alternative trajectories that minimizes the predicted impact level from the first collision and any predicted potential secondary collision.

4. The computer system of any of previous claims 1 to 3, wherein the predicted impact level of the first collision and a subsequent impact level from any predicted potential secondary collision is defined as a function of estimated jerk in the vehicle, and/or wherein the predicted impact level of the first collision and a subsequent impact level from any predicted potential secondary collision is defined as a function of the number of involved vehicles in the first collision and at least one predicted potential secondary collision.

5. The computer system of any of previous claims 1 to 4, wherein the predicted impact level of the first collision and a subsequent impact level from any predicted potential secondary collision is determined from an estimation of energy generated in the first collision and any predicted potential secondary collision.

6. The computer system of any of previous claims 1 to 5, wherein the processing circuitry is configured to control the vehicle based on the determined at least one alternative trajectory prior to the occurrence of the first collision.

7. The computer system of any of previous claims 1 to 6, wherein the processing circuitry is configured to control the vehicle based on the determined at least one alternative trajectory after the occurrence of the first collision, but prior to any secondary collisions.

8. The computer system of any of previous claims 1 to 7, wherein the processing circuitry is configured to control the vehicle by controlling any one of a brake system and steering system of the vehicle.

9. The computer system of any of previous claims 1 to 8, wherein the processing circuitry is further configured to determine that the first collision between the vehicle and the at least one adjacent vehicle is imminent using historical data indicative of behaviors and capabilities associated with the at least one adjacent vehicle.

10. The computer system of any of previous claims 1 to 9, wherein the processing circuitry is configured to acquire data indicative of the position, speed and trajectory of the at least one adjacent vehicle, and configured to determine the position, speed and trajectory of the at least one adjacent vehicle from the acquired data, and/or wherein the processing circuitry is configured to acquire data indicative of the position, speed and trajectory of the vehicle, and configured to determine the position, speed and trajectory of the vehicle from the acquired data.

11. The computer system of claim 10, wherein the processing circuitry is configured to acquire data from a surrounding sensing system (50, 60) configured to acquire positional and movement-related information of any one of the vehicle, the at least one adjacent vehicle, and the at least one object.

12. A vehicle (10), such as an autonomous vehicle, comprising a computer system of any of the claims 1-11.

13. A computer-implemented method (300) for controlling a vehicle (10) relative to at least one adjacent vehicle operating within a confined geographical area (200), the method comprising: determining (S10), by processing circuitry of a computer system, a position, speed and trajectory of the at least one adjacent vehicle relative to a position, speed and trajectory of the vehicle; determining (S30), by the processing circuitry of the computer system, that a first collision between the vehicle and the at least one adjacent vehicle is imminent based on the determined position, speed and trajectory of the at least one adjacent vehicle relative to the position, speed and trajectory of the vehicle; predicting (S40), by the processing circuitry of the computer system, an impact level of the first collision on the vehicle, the impact level being indicative of a predicted effect of the first collision on the vehicle; determining (S50), by the processing circuitry of the computer system, at least one alternative trajectory for the vehicle based on the predicted impact level and any predicted potential secondary collision between the vehicle and at least one object; and controlling (S60), by the processing circuitry of the computer system, the vehicle based on the determined at least one alternative trajectory.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
